# EUROPEAN PATENT SPECIFICATION

(11) **EP 1 394 927 B1**
(45) Date of publication and mention of the grant of the patent: **25.04.2007**
(21) Application number: 03255378.6
(22) Date of filing: 29.08.2003
(51) Int. Cl.: H02M 3/28

(54) **Power supply with surge protection**
Stromversorgung mit Überspannungsschutz
Alimentation de puissance avec protection contre les surtensions

(30) Priority: 29.08.2002 KR 2002051607
(43) Date of publication of application: 03.03.2004
(73) Proprietor: SAMSUNG ELECTRONICS CO., LTD., Suwon-si, Gyeonggi-do 442-742 (KR)
(72) Inventor: Cho, Jong-hwa, Paldal-gu Suwon-city Gyunggi-do (KR)
(74) Representative: Geary, Stuart Lloyd

(56) References cited:
- EP-A- 0 415 244
- EP-A- 0 649 222
- EP-A- 1 209 549
- WO-A-98/38727
- FR-A- 2 610 149
- GB-A- 1 596 674
- GB-A- 2 320 342
- US-A- 4 380 044
- US-A- 4 829 259
- US-A- 4 868 729
- US-A- 5 278 746
- US-A- 5 336 985
- US-A- 5 438 499
- US-A- 5 486 992
- US-A- 5 528 125
- US-A- 5 600 234
- US-A- 5 619 403
- US-A- 5 754 414
- US-A- 5 783 930
- US-A- 5 808 455
- US-A- 5 815 015
- US-A- 5 877 614
- US-A- 5 883 501
- US-A- 5 926 383
- US-A- 6 055 168
- US-B1- 6 188 588
- US-B1- 6 362 981
- US-B1- 6 366 068
- US-B1- 6 366 481
- PATENT ABSTRACTS OF JAPAN vol. 003, no. 066 (E-115), 7 June 1979 (1979-06-07) & JP 54 044720 A (NEC CORP.), 9 April 1979 (1979-04-09)
- PATENT ABSTRACTS OF JAPAN vol. 003, no. 113 (E-139), 19 September 1979 (1979-09-19) & JP 54 090523 A (NEC CORP.), 18 July 1979 (1979-07-18)

## Description

The present invention relates to a switch mode high voltage power supply according to the pre-characterising part of claim 1 appended hereto.

Laser printers and facsimile machines require high voltage dc sources. These sources may comprise an inverter for converting dc into ac, a transformer for stepping up the ac voltage and high voltage rectifying and multiplying means.

The sources can suffer from an undesirable surge voltage associated with the transformer when the power supply is turned off. In the case of a laser printer, a surge voltage, occurring at the time when electric power interrupted, may induce an excessive voltage to be applied to an organic photo conductor drum, which may damage the drum. In addition, electric power is unnecessarily applied to the high voltage dc source while in stand-by mode.

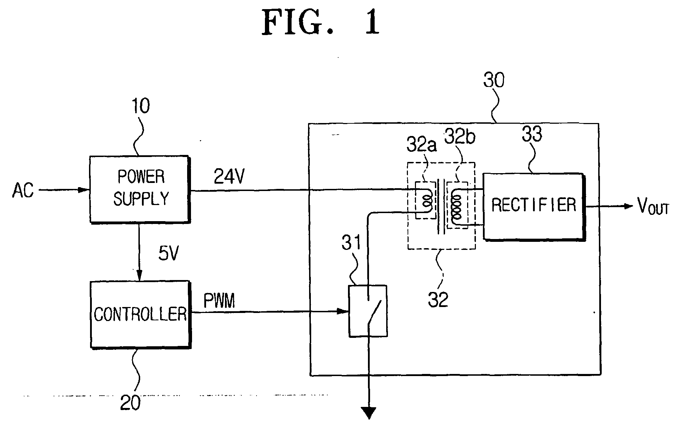

Figure 1 is a block diagram schematically showing a conventional high voltage supply device.

The high voltage supply device shown in Figure 1 has a power supply 10, a controller 20 and a high voltage generator 30. The power supply 10 rectifies an externally applied ac voltage to generate dc voltages of, for example, 24V and 5V. The 24V output is supplied to the high voltage generator 30 and the 5V output powers the controller 20.

The controller 20 outputs a pulse width modulation (PWM) signal to the high voltage generator 30.

The high voltage generator 30 generates ac voltages ranging from a few hundred volts to a few thousand volts by on and off switching in dependence on the a PWM signal from the controller 20.

The high voltage generator 30 includes a switching part 31, a transformer 32 and a rectifier 33.

The switching part 31 is repeatedly turned on and off by the PWM signal from the controller 20. When the switching part 31 is turned off by the PWM signal, the flow of current from 24V output of the power supply 10 through the primary 32a of the transformer 32 is interrupted.

The transformer 32 induces a high ac voltage across its secondary 32b from opening and closing of the path through the primary 32a from the 24V output of the power supply 10 in response to the PWM signal. The number of turns of the secondary 32b is greater than the turns of the primary 32a in order to output a voltage higher than the applied voltage.

The rectifier 33 rectifies the ac voltage across the secondary 32b of the transformer 32. The rectifier 33 uses a N-times voltage multiplier to increase the voltage outputted from the transformer 32.

The switching part 31 is closed when the PWM signal is low and open when the PWM signal is high. When power supply 10 is switched off the 5V supply to the controller 20 is rapidly reduced be3low its minimum operating voltage causing the PWM signal output to be low. However, the 24V output falls more slowly and there may still be an output of, for example, 18V when the controller ceases operating Thus, there is the possibility that the switching part 31 is turned on, after the device is turned off, to allow an addition pulse of current from the 24V output of the power supply 10 through the primary 32a and the continued output of a high voltage by the rectifier 33.

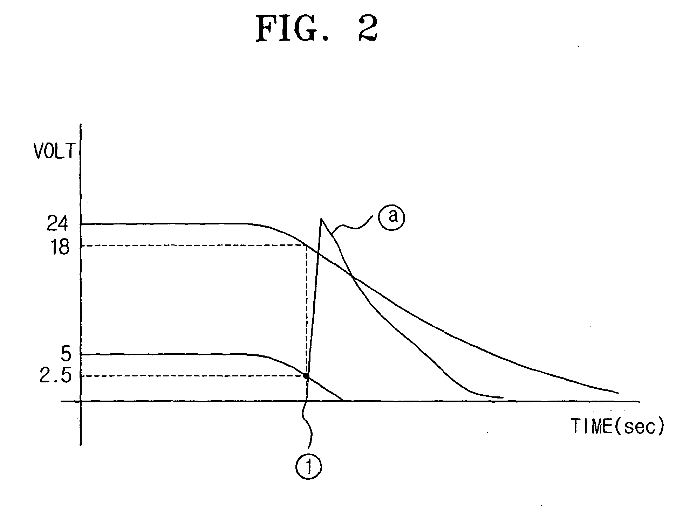

Figure 2 shows the output voltage of the high voltage supply device of Figure 1 when it is turned off.

Referring to Figure 2, a dc voltage of, for example, 18V exists across the primary 32a of the transformer 32 at the time labeled 1, when the ac voltage applied externally to the power supply 10 is cut off, so that the voltage at the 5V output of the power supply 20 is lowered to a value equal to, or less, than 2.5V. At this time, since the 5V output's voltage drops to a value substantially equal to, or less than, 2.5V, the controller 20 ceases operating and the PWM signal output goes low. Accordingly, when the potential level of the PWM signal outputted from the controller 20 becomes the logic "low", a voltage, labeled "a", exists across the primary 32a of the transformer 32 so that a high ac voltage, i.e. a surge voltage, is induced across the secondary 32b of the transformer 32.

As described above, a high dc voltage, applied to electronic devices such as laser printers, facsimile machines, or the like, may damage parts of electronic devices when the devices are in a power-off state.

A power supply according to the present invention is characterised by the controller being configured to output a power supply enable signal when it is operatively powered and a second switch means responsive to said power supply enable signal so as to apply the first voltage output to the transformer only when the controller is operatively powered.

Preferably, the primary of the transformer is connected in series between the first and second switching means.

Preferably, a voltage multiplying rectifier is provided for multiplying and rectifying the output of the transformer.

Preferably, the power supply circuit is configured such when the input ac voltage is removed, the voltage at the second dc voltage output falls to a voltage at which the controller is no longer operatively powered before the voltage at the first dc voltage output becomes operationally insignificant.

Embodiments of the present invention will now be described, by way of example, with reference to Figures 3 to 5 of the accompanying drawings, in which:
Figure 1 is a block diagram showing a conventional high voltage supply device;
Figure 2 is a view showing the output voltage of the high voltage supply device of Figure 1 when the high voltage supply device is turned off;
Figure 3 is a block diagram of a high voltage supply device according to the present invention;
Figure 4 is block diagram of part of an alternative high voltage generator according to the present invention; and
Figure 5 is a flowchart illustrating the operation of the device shown in Figure 3.

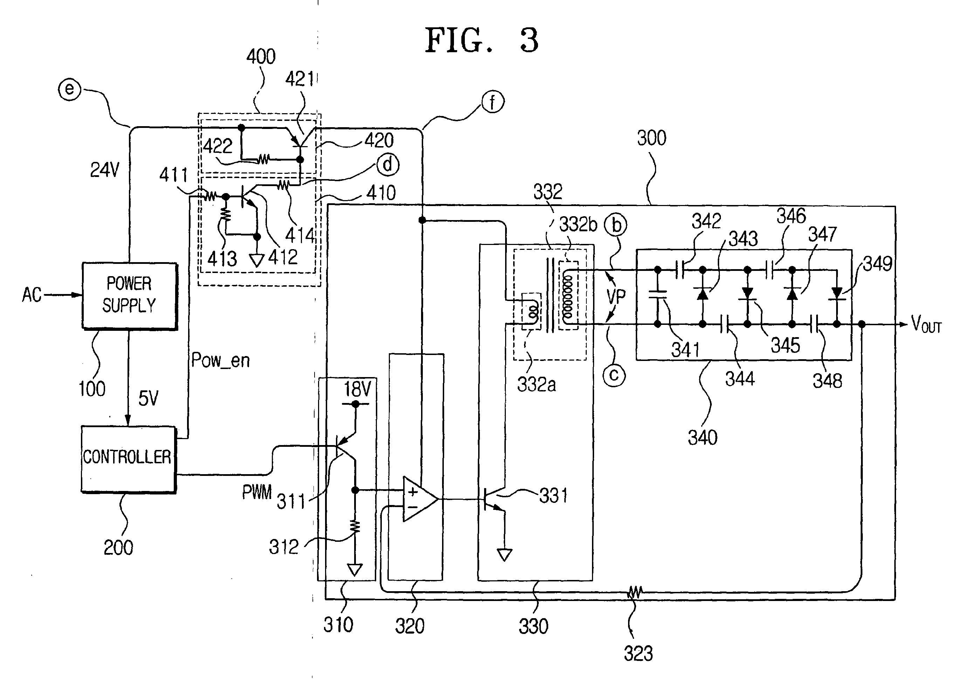

Referring to Figure 3, a high voltage supply device includes a power supply 100, a controller 200, a high voltage generator 300 and a power supply controller 400.

The power supply 100 rectifies an externally applied ac voltage to generate dc voltages of 24V and 5V. The 24V output is used for high voltage generation. The 5V output powers the controller 200.

The controller 200 outputs a PWM signal and selectively generates a control signal Pow_en, which is "high" only when the high voltage supply device should be outputting a high voltage. In a case of a laser printer, for example, the controller 200 outputs the control signal Pow_en in its high state only when electrically charging the organic photoconductor drum with a high voltage. That is, the controller 200 is set to output the control signal Pow_en in its high state only when a device such as a printer, facsimile machine or the like with a high voltage supply device requires a high voltage. This may be achieved by implementing the controller 200 with a microcontroller (not shown). A memory (not shown) in the microcontroller may be programmed to cause the microcontroller to output the control signal Pow_en in its high state only when a high voltage is required.

The high voltage generator 300 responds to a PWM signal applied from the controller 200 and outputs voltages ranging from a few hundred to a few thousand volts.

The power supply controller 400 responds to the control signal Pow_en being in its high state by applying the 24V output of the power supply 100 to the high voltage generator 300. Accordingly, when the external ac supply to the power supply is turned off, the 24V output of the power supply 100 is not applied to the high voltage generator 300 and the high voltage generator 300 does not generate a surge voltage when the external ac voltage is removed.

The high voltage generator 300 has an amplifier 310, a voltage booster 330 and a rectifier 340.

The amplifier 310 amplifies the PWM signal from the controller 200 to a predetermined potential level, for example, 18V.

The comparator 320 comprises an operational amplifier having a non-inverting (+) input terminal and an inverting (-) input terminal. The operational amplifier receives the amplified PWM signal at its non-inverting input and compares it with a fed back portion of a voltage output by the rectifier 340, which is received at the operational amplifier's inverting input terminal. Accordingly, if the fed back portion of the rectifier's output is greater than the output of the amplifier 31, the output of the operational amplifier is kept low and the voltage booster is disabled.

The voltage booster 330 includes a transformer 332 whose primary 332a is connected in series between the output of the power supply controller 400 and switching transistor 331 controlled by the output of the comparator 320. The on/off operation of the transistor 331 in dependence on the output of the comparator 320 boosts the 24V dc from the power supply controller 400 to ac voltages ranging from a few hundred to a few thousand volts. The path through the primary 332a of the transformer 332a to ground is frequently opened and closed so that an effective ac voltage is applied to primary 332a of the transformer 332 . Accordingly, a high voltage is induced across the secondary 332b of the transformer 332. The output voltage is determined by the turns ratio between the primary 332a and secondary 332b and the secondary 332b has more turns than the primary 332a.

The rectifier 340 rectifies the high ac voltage output by the voltage booster 330. The rectifier 340 uses a N-times voltage multiplier to boost the dc voltage from ac voltage level output from the voltage booster 330. The rectifier shown in Figure 3 is a conventional Villard four-times voltage multiplier, which outputs a voltage of 4 x Vp where Vp is the output voltage of the transformer 332.

During a first negative half-cycle, the output of the transformer 332 charges a first capacitor 341 so than Vp appears between nodes "b" and "c" and a second capacitor 342 is charged to Vp via a first diode 343.

During the next positive half-cycle, a third capacitor 344 is charged to 2Vp by the output of the transformer 332 in series with the voltage across the second capacitor 342 via a second diode 345.

During the next negative half-cycle, the charge in the second capacitor 342 is replenished and a fourth capacitor 346 is charged to 3Vp by the transformer output in series with the 2Vp across the third capacitor 344 via a third diode 345.

During the next positive half-cycle, the charge in the third capacitor 344 is replenished and a fifth capacitor 348 is charged to 4Vp by the transformer output in series with the 3Vp across the fourth capacitor 346 via a fourth diode 349.

During subsequent cycles, the output is kept substantially at 4Vp due to the negligible current drawn therefrom.

The power supply controller 400 has a first switching part 410 and a second switching part 420.

The first switching part 410 responds to the control signal Pow_en going high when the power supply 100 supply 5V power to the controller 200 by holding the voltage at node "d" at ground. The first switching part 410 comprises an NPN transistor 412, a resistor 411 for limiting the current applied to the base of the transistor 412, a resistor 413 for biasing the transistor 412 and a resistor 414 for limiting the collector current of the transistor 412.

The second switching part 420 forms a current path between a node "e" and node "f" when the node "d" is brought to ground by the first switching part 410. Therefore, when the control signal Pow_en signal is in its high state, the 24 dc output of the power supply 100 is supplied from the collector of the transistor 421 and applied to the primary 332a of the transformer 332 of the voltage booster 330. At substantially the same time, the PWM signal, output from the controller 200, is high to keep the transistor 331 of the voltage booster 300 turned off. Then the PWM signal proper is output so that the switching transistor 331 is turned on and off to chop the current through the primary 332a of the transformer 332. This causes a high ac voltage is induced in the secondary 332b of the transformer 332.

When the external ac voltage "AC" supplied to the power supply 100 is removed, the control signal Pow_en is changed to its low state so that the power supply controller 400 cuts the current path between the nodes "e" and "f". That is, when the high voltage supply device is turned off, the 24V dc is no longer applied to the primary 332a of the transformer 332 so that an undesired surge voltage is not induced across the output terminals of the transformer 332.

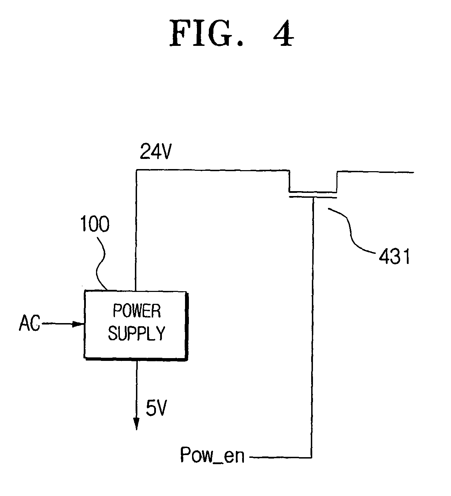

Referring to Figure 4, the power supply controller 400 of the high voltage supply device may be implemented with an NMOS transistor 431. The gate of the MOS transistor 431 receives the control signal Pow_en from the controller 200. Accordingly, the high voltage generator 300 operates only when the control signal Pow_en is in its high state so that, when the external ac voltage "AC" applied to the power supply 100 is removed as in Figure 3, substantially no surge voltage occurs.

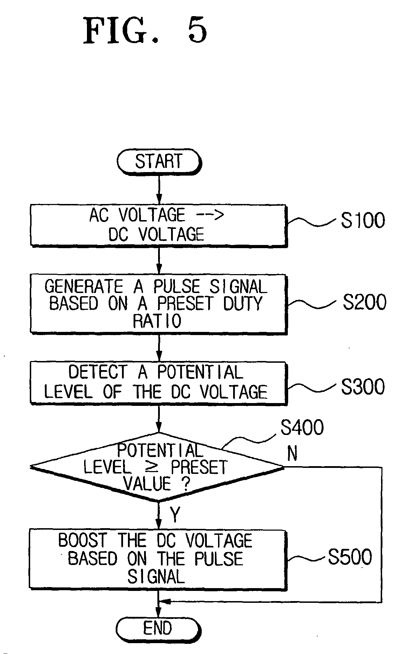

Referring to Figure 5, in the operation of the above described embodiments, an externally applied ac voltage AC is rectified and regulated by the power supply 100 to generate predetermined dc voltages of 5V and 25V in operation 100 (O100) In operation 200 (O200), a PWM signal is generated and the control signal Pow_en is output in its high state by the controller 200 in response to being supplied 5V dc from the power supply 100. Next, the state of the control signal Pow_en is detected by the power supply controller 400 (O300). The logic level is compared with a preset level and the power supply controller 400 is turned on when the logic state is "high", and turned off when the state is "low" (O400). Furthermore, a dc voltage of 24V is received by the high voltage generator 300 when the power supply controller 400 is turned on, boosting the input voltage to a predetermined voltage, for example ranging from a few hundred to a few thousand volts, and not when the power supply controller 400 is turned off (O500).

A high ac voltage is generated by the high voltage generator 300 by switching operations in dependence on the PWM signal. Accordingly, a high ac voltage is induced in the secondary 332b of the transformer 332 by the switching operations in dependence on the PWM signal. That is, the high voltage generator 300 operates only with the control signal Pow_en generated when an ac voltage AC is externally input to the power supply 100 and the dc voltage of 5V is applied to the controller 200, so that the high voltage generator 300 does not operate when the ac voltage is not applied to the power supply 100. Accordingly, when ac voltage from an external source is cutoff, surge voltage is not generated when a dc voltage applied to the transformer 332 of the high voltage generator 300 is discharged.

As described above, the present invention, when used in, for example, a laser printer and a facsimile machine requiring a high voltage supply device or an electronic device requiring a high dc voltage, does not generate a surge voltage hen the power of such an electronic device is turned off. Further, the high voltage supply device is not supplied therein with any dc voltage while in the stand-by mode, to thereby reduce power consumption.

According to another aspect of the invention, the microcontroller in the controller 200 is a computer implementing the method in Figure 5 using data encoded on a computer readable medium.

## Claims

1. A switch mode high voltage power supply comprising:
a power supply circuit (100) for providing first and second dc voltage outputs from an input ac voltage, the second voltage being lower than the first voltage;
a transformer (332) connected so as to be energised from said first voltage output;
first switching means (331) for chopping the voltage across the primary (332a) of the transformer (332); and
a controller (200) for generating a switching signal for controlling the first switching means (331) and powered from said second dc voltage output;
**characterised by**
the controller (200) being configured to output a power supply enable signal (Pow_en) when it is operatively powered and a second switch means (400) responsive to said power supply enable signal (Pow_en) so as to apply the first voltage to the transformer (332) only when the controller is operatively powered.

2. A power supply according to claim 1, wherein the primary (332a) of the transformer (332) is connected in series between the first and second switching means.

3. A power supply according to claim 1 or 2, including a voltage multiplying rectifier (340) for multiplying and rectifying the output of the transformer (332).

4. A power supply according to claim 1, 2 or 3, wherein the power supply circuit (100) is configured such when the input ac voltage is removed, the voltage at the second dc voltage output falls to a voltage at which the controller (200) is no longer operatively powered before the voltage at the first dc voltage output becomes operationally insignificant.

5. A power supply according to claim 1, wherein the power supply circuit (100) comprises a rectifier (340) for rectifying the input ac voltage to produce the dc - voltages, the controller (200) is configured to generate the switching signal to have a predetermined duty ratio and a high voltage generator (300) boosting the second dc voltage based on the chopped voltage.

6. The power supply as claimed in claim 5, wherein the high voltage generator (300) includes:
an amplifier (310) amplifying the switching signal from the controller (200), wherein the switching signal is a pulse width modulation (PWM) signal;
a comparator (320) comparing the amplified PWM signal output from the amplifier (310) with the boosted voltage;
a voltage booster (330) boosting the output of the second switching means (400) based on switching operations according to an output of the comparator (320); and
a rectifier (340) rectifying an output of the voltage booster (330).

7. The power supply as claimed in claim 6, wherein the amplifier (310) includes:
a transistor (311), the emitter of which is connected to a third dc voltage having a potential level between potential levels of the first dc voltage and the second dc voltage, and the base of which has the control signal applied thereto; and
a resistor (312) connected between the collector of the transistor (311) and ground potential.

8. The power supply as claimed in claim 6, wherein the comparator (320) inputs an output of the amplifier (310) through a positive input terminal thereof and inputs a fed-back boosted voltage through a negative input terminal thereof.

9. The power supply as claimed in claim 6, wherein the voltage booster (330) includes:
a transistor (311), the emitter of which is grounded and the base of which is connected to an output of the comparator (320); and wherein an input terminal of the transformer (332) is connected to the collector of the transistor (331).

10. The power supply as claimed in claim 6, wherein the rectifier (340) is an N-times multiple voltage rectifier boosting the potential of a voltage output from the voltage booster (330).

11. The power supply as claimed in claim 5, wherein the second switch means (400) includes:
a first transistor (421), the emitter of which inputs the first dc voltage and the collector of which energises the transformer (332);
a first resistor (422) connected between the emitter of the first transistor (421) and the base of the first transistor (421);
a second resistor (411), one end of which has the control signal applied thereto;
a second transistor (412), the base of which is connected to the other end of the second resistor (411) and the emitter of which is grounded;
a third resistor (413) connected to the base and the emitter of the second transistor (412); and
a fourth resistor (414) connected between the collector of the second transistor (412) and the base of the first transistor(421).

12. The power supply as claimed in claim 5, wherein the second switch means (400) is an NMOS transistor (431), the drain and the gate of which have the dc voltage input thereto, and the source of which becomes an output terminal.

13. A method of operating a switch mode high voltage power supply, the method comprising:
providing first and second dc voltage outputs from an input ac voltage, the second voltage being lower than the first voltage;
connecting a transformer (332) so as to be energised from said first voltage output;
chopping the voltage across the primary (332a) of the transformer (332); and
generating a switching signal using a controller (200) for controlling the chopping of the voltage, the controller (200) being powered from the second dc voltage, **characterised by** configuring the controller (200) to output a power supply enable signal (Pow_en) when it is operatively powered and applying the first voltage to the transformer (332) in response to said power supply enable signal (Pow_en), only when the controller (200) is operatively powered.

14. A method according to claim 13, comprising rectifying the input ac voltage to produce the dc voltages, generating the switching signal to have a predetermined duty ratio and boosting the second dc voltage based on the chopped voltage.

15. The method according to claim 14, comprising:
amplifying the switching signal from the controller (200), wherein the switching signal is a pulse width modulation (PWM) signal;
comparing the amplified PWM signal with the boosted voltage;
boosting the signal energising the transformer (332) based on switching operations according to an output of the comparing step; and
rectifying the boosted signal.

## Patentansprüche

1. Schaltmodus-Hochspannungs-Energieversorgungseinheit mit:
einem Energieversorgungsschaltkreis (100) zum Bereitstellen erster und zweiter Gleichspannungsausgaben von einer Eingangswechselspannung, wobei die zweite Spannung niedriger als die erste Spannung ist;
einem Transformator (332), der angeschlossen ist, um von der ersten Spannungsausgabe erregt zu werden;
einer ersten Schalteinrichtung (331) zum Zerhacken der Spannung über die Primärseite (332a) des Transformators (332); und
einer Steuereinheit (200) zum Erzeugen eines Schaltsignals zum Steuern der ersten Schalteinrichtung (331) und angetrieben von der zweiten Gleichspannungsausgabe;
**dadurch gekennzeichnet, dass**
die Steuereinheit (200) konfiguriert ist zum Ausgeben eines Energieversorgungs-Freigabesignals (Pow_en), wenn sie wirkend angetrieben ist, und durch eine zweite Schalteinrichtung (400), die auf das Energieversorgungs-Freigabesignal (Pow_en) anspricht, um die erste Spannung auf den Transformator (332) anzuwenden, nur wenn die Steuereinheit wirkend angetrieben ist.

2. Energieversorgungseinheit gemäß Anspruch 1, wobei die Primärseite (332a) des Transformators (332) in Reihe zwischen der ersten und zweiten Umschalteinrichtung angeschlossen ist.

3. Energieversorgungseinheit gemäß Anspruch 1 oder 2, einschließlich eines Spannungsmultiplizier-Gleichrichters (340) zum Multiplizieren und Gleichrichten der Ausgabe des Transformators (332).

4. Energieversorgungseinheit gemäß Anspruch 1, 2 oder 3, wobei der Energieversorgungsschaltkreis (100) so konfiguriert ist, dass, wenn die Eingangswechselspannung entfernt ist, die Spannung bei der zweiten Gleichspannungsausgabe auf eine Spannung fällt, bei welcher die Steuereinheit (200) nicht länger wirkend angetrieben ist, bevor die Spannung bei der ersten Gleichspannungsausgabe betriebstechnisch insignifikant wird.

5. Energieversorgungseinheit gemäß Anspruch 1, wobei der Energieversorgungsschaltkreis (100) einen Gleichrichter (340) umfasst zum Gleichrichten der Eingangswechselspannung zum Produzieren der Gleichspannungen, wobei die Steuereinheit (200) konfiguriert ist zum Erzeugen des Schaltsignals, um ein vorbestimmtes Betriebsverhältnis zu haben, und einen Hochspannungsgenerator (300), der die zweite Gleichspannung basierend auf der zerhackten Spannung erhöht.

6. Energieversorgungseinheit gemäß Anspruch 5, wobei der Hochspannungsgenerator (300) enthält:
einen Verstärker (310), der das Schaltsignal von der Steuereinheit (200) verstärkt, wobei das Schaltsignal ein Pulsbreitenmodulations-(PWM) Signal ist;
einen Komparator (320), der das von dem Verstärker (310) ausgegebene, verstärkte PWM-Signal mit der erhöhten Spannung vergleicht;
einen Spannungserhöher (330), der die Ausgabe der zweiten Schalteinrichtung (400) basierend auf Schaltoperationen gemäß einer Ausgabe des Komparators (320) erhöht; und
einen Gleichrichter (340), der eine Ausgabe des Spannungserhöhers (330) gleichrichtet.

7. Energieversorgungseinheit gemäß Anspruch 6, wobei der Verstärker (310) enthält:
einen Transistor (311), dessen Emitter mit einer dritten Gleichspannung mit einem Potentialpegel zwischen Potentialpegeln der ersten Gleichspannung und der zweiten Gleichspannung verbunden ist, und dessen Basis das Steuersignal darauf angewendet hat; und
einen Widerstand (312), der zwischen dem Kollektor des Transistors (311) und dem Massepotential angeschlossen ist.

8. Energieversorgungseinheit gemäß Anspruch 6, wobei der Komparator (320) eine Ausgabe des Verstärkers (310) durch einen positiven Eingangsanschluss davon eingibt und eine zurückgekoppelte erhöhte Spannung durch einen negativen Eingangsanschluss davon eingibt.

9. Energieversorgungseinheit gemäß Anspruch 6, wobei der Spannungserhöher (330) enthält:
einen Transistor (311), dessen Emitter geerdet ist und dessen Basis mit einem Ausgang des Komparators (320) verbunden ist; und wobei ein Eingangsanschluss des Transformators (332) mit dem Kollektor des Transistor (331) verbunden ist.

10. Energieversorgungseinheit gemäß Anspruch 6, wobei der Gleichrichter (340) ein N-facher Vielfachspannungsgleichrichter ist, der das Potential einer Spannungsausgabe von dem Spannungserhöher (330) erhöht.

11. Energieversorgungseinheit gemäß Anspruch 5, wobei die zweite Schalteinrichtung (400) enthält:
einen ersten Transistor (421), dessen Emitter die erste Gleichspannung eingibt und dessen Kollektor den Transformator (332) erregt;
einen ersten Widerstand (422), der zwischen dem Emitter des ersten Transistors (421) und der Basis des ersten Transistors (421) angeschlossen ist;
einen zweiten Widerstand (411), dessen eines Ende das Steuersignal darauf angewendet hat;
einen zweiten Transistor (412), dessen Basis mit dem anderen Ende des zweiten Widerstands (411) verbunden ist, und dessen Emitter geerdet ist;
einen dritten Widerstand (413), der mit der Basis und dem Emitter des zweiten Transistors (412) verbunden ist; und
einen vierten Widerstand (414), der zwischen dem Kollektor des zweiten Transistors (412) und der Basis des ersten Transistors (421) angeschlossen ist.

12. Energieversorgungseinheit gemäß Anspruch 5, wobei die zweite Schalteinrichtung (400) ein NMOS-Transistor (431) ist, und an dessen Drain-Anschluss und dessen Gate-Anschluss die Gleichspannung eingegeben ist, und dessen Source-Anschluss ein Ausgangsanschluss wird.

13. Ein Verfahren zum Betreiben einer Schaltmodus-Hochspannungs-Energieversorgungseinheit, wobei das Verfahren umfasst:
Bereitstellen erster und zweiter Gleichspannungsausgaben von einer Eingangswechselspannung, wobei die zweite Spannung niedriger als die erste Spannung ist;
Anschließen eines Transformators (332), damit dieser von der ersten Spannungsausgabe erregt ist;
Zerhacken der Spannung über die Primärseite (332a) des Transformators (332); und
Erzeugen eines Schaltsignals mit Verwenden einer Steuereinheit (200) zum Steuern des Zerhackens der Spannung, wobei die Steuereinheit (200) von der zweiten Gleichspannung angetrieben wird, **gekennzeichnet durch** Konfigurieren der Steuereinheit (200) zum Ausgeben eines Energieversorgungs-Freigabesignals (Pow_en), wenn sie wirkend angetrieben wird, und Anwenden der ersten Spannung auf den Transformator (332) in Ansprechen auf das Energieversorgungs-Freigabesignale (Pow_en), nur wenn die Steuereinheit (200) wirkend angetrieben wird.

14. Verfahren gemäß Anspruch 13, mit Gleichrichten der Eingangswechselspannung zum Produzieren der Gleichspannungen, Erzeugen des Schaltsignals, um ein vorbestimmtes Betriebsverhältnis zu haben, und Erhöhen der zweiten Gleichspannung basierend auf der zerhackten Spannung.

15. Verfahren gemäß Anspruch 14, mit:
Verstärken des Schaltsignals von der Steuereinheit (200), wobei das Schaltsignal ein Pulsbreitenmodulations-(PWM) Signal ist;
Vergleichen des verstärkten PWM-Signals mit der erhöhten Spannung;
Erhöhen des Signals mit Erregen des Transformators (332) basierend auf Schaltoperationen gemäß einer Ausgabe des Vergleichsschrittes; und
Gleichrichten des erhöhten Signals.

## Revendications

1. Alimentation électrique haute tension à mode commutable comprenant :
un circuit d'alimentation électrique (100) pour fournir des première et deuxième sorties de tension continue à partir d'une tension alternative d'entrée, la deuxième tension étant inférieure à la première tension ;
un transformateur (332) connecté de façon à être alimenté par ladite première sortie de tension ;
des premiers moyens de commutation (331) pour hacher la tension à travers le primaire (332a) du transformateur (332) ; et
une unité de commande (200) pour générer un signal de commutation pour commander les premiers moyens de commutation (331) qui est alimentée par ladite deuxième sortie de tension continue;
**caractérisée par**
l'unité de commande (200) configurée pour délivrer un signal de validation d'alimentation électrique (Pow-en) quand elle est fonctionnellement alimentée et des deuxièmes moyens de commutation (400) réagissant audit signal de validation d'alimentation électrique (Pow-en) de façon à appliquer la première tension au transformateur (332) seulement quand l'unité de commande est fonctionnellement alimentée.

2. Alimentation électrique selon la revendication 1, dans laquelle le primaire (332a) du transformateur (332) est connecté en série entre les premiers et deuxièmes moyens de commutation.

3. Alimentation électrique selon la revendication 1 ou 2, incluant un redresseur multiplicateur de tension (340) pour multiplier et redresser la sortie du transformateur (332).

4. Alimentation électrique selon la revendication 1, 2 ou 3, dans lequel le circuit d'alimentation électrique (100) est configuré de sorte que lorsque la tension alternative d'entrée est supprimée, la tension à la deuxième sortie de tension continue descend à une tension à laquelle l'unité de commande (200) n'est plus fonctionnellement alimentée avant que la tension à la première sortie de tension continue devienne fonctionnellement insignifiante.

5. Alimentation électrique selon la revendication 1, dans laquelle le circuit d'alimentation électrique (100) comprend un redresseur (340) pour redresser la tension alternative d'entrée afin de produire les tensions continues, l'unité de commande (200) est configurée pour générer le signal de commutation afin d'avoir un taux d'utilisation prédéterminé et un générateur de haute tension (300) pour amplifier la deuxième tension continue basée sur la tension hachée.

6. Alimentation électrique selon la revendication 5, dans laquelle le générateur haute tension (300) inclut :
un amplificateur (310) amplifiant le signal de commutation provenant de l'unité de commande (200), dans laquelle le signal de commutation est un signal de modulation de largeur d'impulsion ;
un comparateur (320) comparant la sortie de signal de modulation de largeur d'impulsion amplifié par l'amplificateur (310) avec la tension survoltée ;
un survolteur (330) survoltant la sortie des deuxièmes moyens de commutation (400) basée sur des opérations de commutation en conformité avec une sortie du comparateur (320) ; et
un redresseur (340) redressant une sortie du survolteur (330).

7. Alimentation électrique selon la revendication 6, dans laquelle l'amplificateur (310) inclut :
un transistor (311), dont l'émetteur est connecté à une troisième tension continue ayant un niveau de potentiel entre les niveaux de potentiel de la première tension continue et de la deuxième tension continue, et dont la base a le signal de commande qui lui est appliqué ; et
une résistance (312) connectée entre le collecteur du transistor (311) et la masse.

8. Alimentation électrique selon la revendication 6, dans laquelle le comparateur (320) reçoit une sortie de l'amplificateur (310) sur sa borne d'entrée positive et reçoit une tension survoltée de rétroaction sur sa borne d'entrée négative.

9. Alimentation électrique selon la revendication 6, dans laquelle le survolteur (330) inclut :
un transistor (311), dont l'émetteur est relié à la masse et dont la base est connectée à une sortie du comparateur (320) ; et dans laquelle une borne d'entrée du transformateur (332) est connectée au collecteur du transistor (331)

10. Alimentation électrique selon la revendication 6, dans laquelle le redresseur (340) est un redresseur de tension multipliant par N survoltant le potentiel d'une sortie de tension par le survolteur (330).

11. Alimentation électrique selon la revendication 5, dans laquelle les deuxièmes moyens de commutation (400) incluent :
un premier transistor (421) dont l'émetteur reçoit la première tension continue et
dont le collecteur alimente le transformateur (332) ;
une première résistance (422) connectée entre l'émetteur du premier transistor (421) et la base du premier transistor (421)
une deuxième résistance (411) dont une extrémité se voit appliquer le signal de commande ;
un deuxième transistor (412) dont la base est connectée à l'autre extrémité de la deuxième résistance (411) et dont l'émetteur est mis à la masse ;
une troisième résistance (413) connectée à la base et à l'émetteur du deuxième transistor (412) ; et
une quatrième résistance (414) connectée entre le collecteur du deuxième transistor (412) et la base du premier transistor (421).

12. Alimentation électrique selon la revendication 5, dans laquelle les deuxièmes moyens de commutation (400) sont un transistor NMOS (431), dont le drain et la grille reçoivent la tension continue et dont la source devient une borne de sortie.

13. Procédé de fonctionnement d'une alimentation électrique haute tension à mode de commutation, le procédé comprenant :
la fourniture de première et deuxième sorties de tension continue à partir d'une tension alternative d'entrée, la deuxième tension étant inférieure à la première tension ;
la connexion d'un transformateur (332) afin qu'il soit alimenté par ladite première sortie de tension ;
le hachage de la tension à travers le primaire (332a) du transformateur (332) ; et
la génération d'un signal de commutation utilisant une unité de commande (200) pour commander le hachage de la tension, l'unité de commande (200) étant alimentée par la deuxième tension continue, **caractérisé par** la configuration de l'unité de commande (200) pour délivrer un signal de validation d'alimentation électrique (Pow-en) quand elle est fonctionnellement alimentée et l'application de la première tension au transformateur (332) en réponse audit signal de validation d'alimentation électrique (Pow-en), seulement quand l'unité de commande (200) est fonctionnement alimentée.

14. Procédé selon la revendication 13, comprenant le redressement de la tension alternative d'entrée afin de produire des tensions continues, la génération du signal de commutation pour avoir un taux d'utilisation prédéterminé et le survoltage de la deuxième tension continue basée sur la tension hachée.

15. Procédé selon la revendication 14, comprenant :
l'amplification du signal de commutation par l'unité de commande (200), dans lequel le signal de commutation est un signal de modulation de largeur d'impulsion ;
la comparaison du signal de modulation de largeur d'impulsion amplifié avec la tension survoltée ;
le survoltage du signal alimentant le transformateur (332) basé sur des opérations de commutation conformément à une sortie de l'étape de comparaison ; et
le redressement du signal survolté.
